# EUROPEAN PATENT APPLICATION

(11) **EP 4 681 871 A1**
(43) Date of publication of application: **21.01.2026**
(21) Application number: 24792748.6
(22) Date of filing: 19.04.2024
(51) Int. Cl.: B23Q 17/09, B23Q 17/00, B23Q 17/24

(54) **MANAGEMENT SYSTEM FOR CUTTING TOOL**

(30) Priority: 21.04.2023 JP 2023070195
(71) Applicant: Makino Milling Machine Co., Ltd., Tokyo 152-8578 (JP)
(72) Inventor: TEZUKA, Ryo, Fujiyoshida-shi, Yamanashi 403-0006 (JP); YAMASAKI, Taisuke, Fujiyoshida-shi, Yamanashi 403-0006 (JP)
(74) Representative: Withers & Rogers
(86) International application number: PCT/JP2024/015516
(87) International publication number: WO 2024/219476

(57) **Abstract**

Provided is a cutting tool management system which can estimate the remaining lifespan of each cutting blade from the wear amount of the cutting tool, without requiring a special device for forming a two-dimensional code or the like near a blade part and without having to previously mark the tool surface as an individual identifier. The system includes an individual identification camera (12) for capturing a seat (Ia) of an insert attached to a tool or a shank part of a tool, a blade condition confirmation camera (56) for capturing a blade part of the insert or the tool, an individual identification database (23) in which there are stored characteristics of an image of the seat of the insert or the shank part captured by the individual identification camera in association with the tool ID, a wear performance database (24) in which there is stored wear performance data obtained from the image of the blade part of the insert or the tool captured by the blade condition confirmation camera for each tool ID stored in the individual identification database, and a controller (21) for estimating a remaining lifespan of each tool from the wear performance data.

## Description

### FIELD

The present invention relates to a cutting tool management system, and in particular, relates to a cutting tool management system which can estimate the remaining lifespan of each cutting blade from the wear of the cutting tool without marking the tool surface as an individual identifier.

### BACKGROUND

As an insert for a cutting tool, for example, an insert having a shape which is rotationally symmetrical every 90° is known (Patent Literature 1). The insert of Patent Literature 1 includes a two-dimensional code which encodes a tool ID for identifying the insert around the mounting hole on a main surface thereof, and this two-dimensional code functions as an individual identifier for the insert.

### [CITATION LIST]

### [PATENT LITERATURE]

[PTL 1] Japanese Patent Application Publication No. 2020-69569

### SUMMARY

### [TECHNICAL PROBLEM]

However, a special device is required for forming a two-dimensional code on the main surface of an insert in the manner of Patent Literature 1. Furthermore, since the main surface of the insert may come into contact with swarf when cutting a workpiece material, the two-dimensional code serving as the individual identifier for the insert may become unidentifiable due to wear or other damage.

The present invention has been made in consideration of the circumstances described above, and an object thereof is to provide a cutting tool management system which can estimate the remaining lifespan of each cutting blade from the amount of wear of the cutting tool, without requiring a special device for forming a two-dimensional code near the blade part, and without using a special tool the surface of which is previously marked with an individual identifier, and which can manage tools so as to be used to the fullest lifespan extent.

### [SOLUTION TO PROBLEM]

The cutting tool management system according to the present invention provides a cutting tool management system for managing lifespans of a plurality of cutting tools, the system comprising an individual identification camera for capturing a seat of an insert attached to a tool or a shank part of a tool, a blade condition confirmation camera for capturing a blade part of the insert or the tool, an individual identification database in which there are stored characteristics of an image of the seat of the insert or the shank part captured by the individual identification camera in association with a tool ID, a wear performance database in which there is stored wear performance data obtained from the image of the blade part of the insert or the tool captured by the blade condition confirmation camera for each tool ID stored in the individual identification database, and a controller for estimating a remaining lifespan of each tool from the wear performance data.

### [ADVANTAGEOUS EFFECTS OF INVENTION]

The cutting tool management system according to the present invention comprises, in addition to a blade condition confirmation camera for capturing the blade part of the insert (which is a part of the tool) or the tool itself (for example, an end mill), an individual identification camera for capturing the seat of the insert attached to the tool or the shank part of the tool, instead of the special device for forming two-dimensional data disclosed in Patent Literature 1. This individual identification camera captures texture, such as fine patterns, scratches, machining marks, etc., on the seat of the insert, which is unique to each individual insert, and identifies the cutting tool.

This texture is originally present on the seat of the insert or the shank part of the tool when it is purchased. Since the seat of the insert or the shank part of the tool do not come into contact with swarf when cutting the workpiece material, the texture will not become unidentifiable as an individual identifier of the tool due to damage during cutting. Thus, according to the present invention, the remaining lifespan of each cutting blade can be estimated from the wear amount of the cutting tool without using a special device for forming two-dimensional data and without using a special tool with a marking as an individual identifier on the tool surface in advance.

### BRIEF DESCRIPTION OF DRAWINGS

FIG. 1 is a block view showing the entirety of a cutting tool management system according to an embodiment of the present invention.
FIG. 2 is a schematic view showing an example of installation of two types of cameras 12, 14 and a blade part (or cutting instrument) in the identification confirmation device 10 shown in FIG. 1.
FIG. 3 shows a cutter body to which the insert I shown in FIG. 2 is attached (FIG. 3(a)), information obtained as a result of individual identification of the entirety of the insert I shown in FIG. 2 (FIG. 3(b)), and information obtained as a result of individual identification of the parts of the insert I disassembled into individual cutting blades (FIG. 3(c)).
FIG. 4 shows an end mill, which is a cutting tool with an integrated cutting blade (FIG. 4(a)), and information obtained as a result of individual identification of the end mill using the identification confirmation device 10 shown in FIG. 2 (FIG. 4(b)).
FIG. 5 is a table showing an example of the individual identification database 23 shown in FIG. 1.
FIG. 6 is a table showing an example of the wear performance database 24 shown in FIG. 1.
FIG. 7 is a table showing an example of the remaining life estimation database 25 shown in FIG. 1.
FIG. 8 is a view showing a series of steps for estimating the remaining lifespan of the end mill 1 after cutting, based on a production plan in which a predetermined number of three types of components a, b, and c are cut and machined in succession, assuming the use of the end mill 1 of FIG. 7.
FIG. 9 is a view showing a series of steps for selecting a suitable end mill by the controller 21 included in the data management device 20 of FIG. 1.
FIG. 10 is a table showing an example of the wear estimation database 26 shown in FIG. 1.
FIG. 11 is a view showing the setting of threshold values when machining various components when cutting is performed based on a production plan consisting of the three steps shown in FIG. 8, and the state of the blade part of the end mill 1 when it is within the range of this threshold value and when it exceeds the threshold value.
FIG. 12 is a side view showing an example of a machine tool.
FIG. 13 shows a cutter body to which a plurality of inserts are attached (FIG. 13(a)), and a table, i.e., a tooling sheet, in which it is recorded which insert is attached to which position on the cutter body (FIG. 13(b)).
FIG. 14 is a schematic view showing an example of an externally installed tool observation device installed in a tool room in a factory or the like.
FIG. 15 is a schematic view showing an example of an externally installed tool observation device installed in a tool room in a factory or the like.
FIG. 16 is a schematic view showing an example of a tool observation device installed in a tool magazine.
FIG. 17 is a schematic view showing an example of a tool observation device installed in a tool magazine.
FIG. 18 is a flowchart showing an operation procedure of a cutting tool management system according to an embodiment of the present invention.

### DESCRIPTION OF EMBODIMENTS

The embodiments of the cutting tool management system according to the present invention will be described in detail below with reference to the drawings. Note that these embodiments do not limit the present invention. Furthermore, the components of the embodiments include those which can easily be replaced by a person skilled in the art, or those which are substantially identical thereto. Furthermore, the various forms included in the embodiments can be arbitrarily combined within the scope which is obvious to a person skilled in the art.

In the following description, both cutting tools with replaceable cutting blades (for example, a cutting tool having a plurality of inserts attached to a cutter body) and cutting tools with integrated cutting blades (for example, an end mill) will be described as cutting tools. For both types of cutting tools, "cutting blade" refers to the blade itself which cuts the workpiece material, "blade part" refers to the cutting blade and the surrounding area thereof, and "cutting instrument" refers to the component which includes the blade part and which is attached to the tooling interface.

### <Cutting Tool Management System>

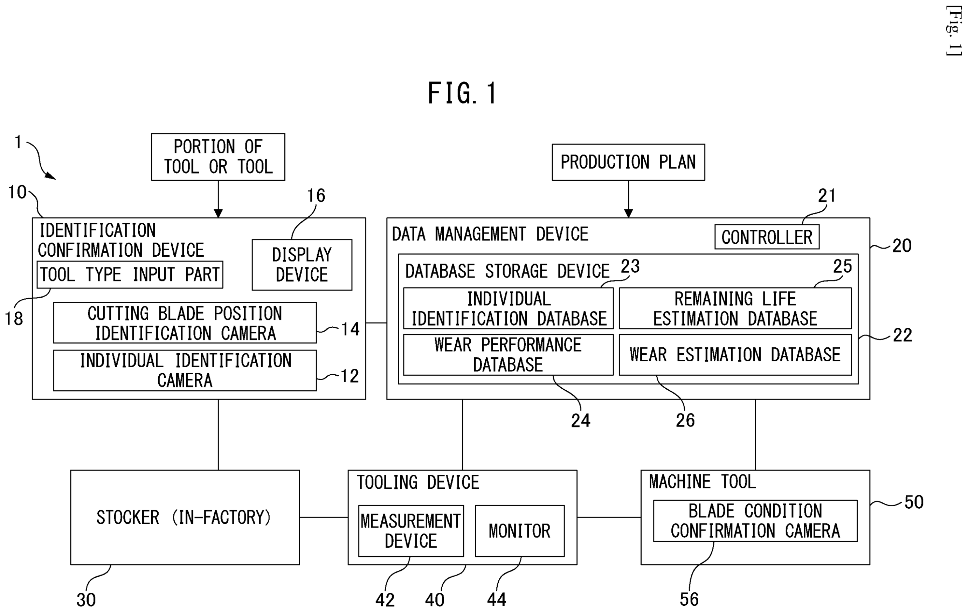

FIG. 1 is a block view showing the entirety of a cutting tool management system according to an embodiment of the present invention. The cutting tool management system 1 shown in the drawing comprises an identification confirmation device 10, a data management device 20, a tool stocker (in-factory) 30, a tooling device 40, and a machine tool 50, and these constituent elements are associated with each other by wire or wirelessly as indicated by the solid lines. Note that in the drawing, a portion of the tool or the tool as a management target, and a production plan as a management condition are shown.

### [Identification Confirmation Device 10]

As shown in FIG. 1, the identification confirmation device 10 comprises an individual identification camera 12, a cutting blade position identification camera 14, a display device 16 (for example, a monitor), and a tool type input part 18 (for example, a portion for performing input using a barcode reader).

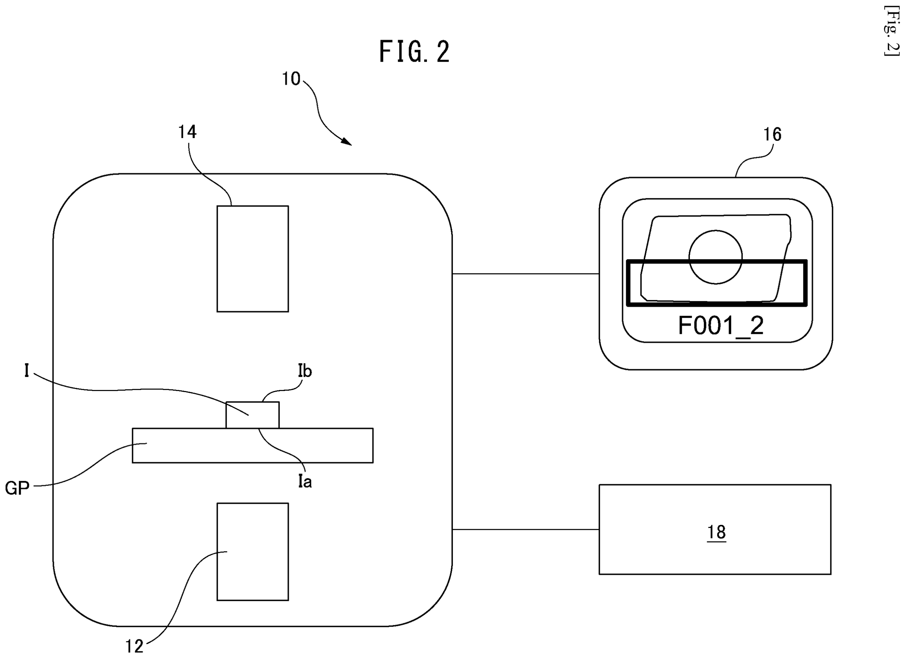

FIG. 2 is a schematic view showing installation examples of the two types of cameras 12, 14 and a blade part (or cutting instrument) within the identification confirmation device 10 shown in FIG. 1, and in particular, shows an example in which individual identification of an insert I constituting a cutting tool having replaceable cutting blades and identification of cutting blade positions are performed.

As shown in FIG. 2, the insert I is arranged on a glass plate GP so that the seat of the insert I (the surface which contacts the cutter body when the insert I is attached to the cutter body (not illustrated)) contacts the glass plate GP. In this state, the individual identification camera 12 captures a seat Ia of the insert I to obtain an image (hereinafter, sometimes referred to as an "individual identification image") of the seat Ia, and the cutting blade position identification camera 14 captures a main surface Ib on the side opposite to the seat Ia to obtain an image (hereinafter, sometimes referred to as a cutting blade position identification image) of the main surface Ib.

The individual identification image is used to identify the texture, such as fine patterns or scratches, on the seat Ia of the insert I, which is unique to the individual insert, and each individual (in this case, each insert I) identified based on the texture is assigned a tool ID.

In contrast, the cutting blade position identification image is displayed on the display device 16 together with the tool ID, and is used by the operator to visually confirm the position of the cutting blade of the corresponding tool ID.

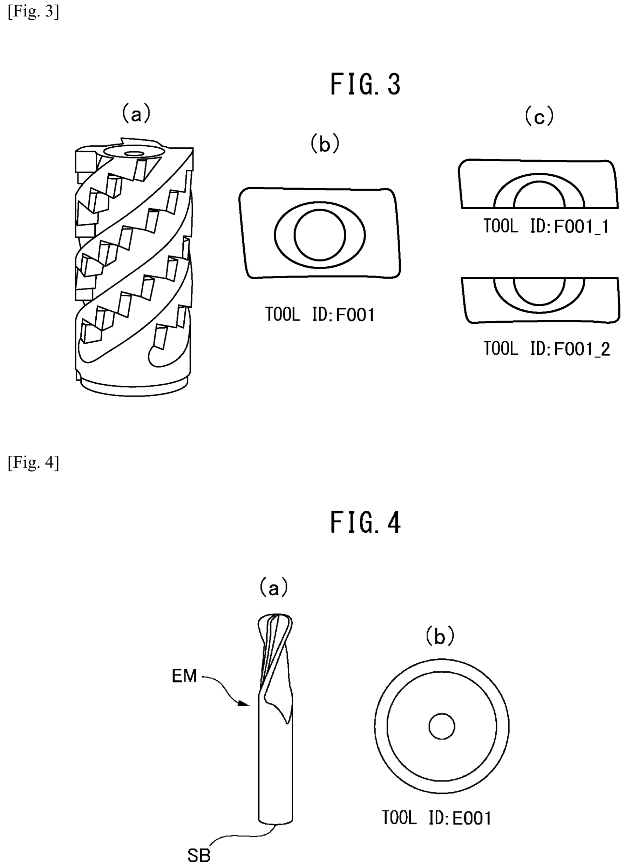

FIG. 3 shows a cutter body (FIG. 3(a)) to which the insert I shown in FIG. 2 is attached, information obtained as a result of individual identification of the entirety of the insert I shown in FIG. 2 (FIG. 3(b)), and information obtained as a result of individual identification of portions of the insert I disassembled into individual cutting blades (FIG. 3(c)).

The information shown in FIG. 3(b) includes a tool ID (individual identification information consisting of a character string in FIG. 3(b)) assigned based on the individual identification image captured by the individual identification camera 12, and the cutting blade position identification image itself captured by the cutting blade position identification camera 14 (cutting blade position identification information in FIG. 3(b)).

By associating the individual identification information and the cutting blade position identification information in this manner, two different pieces of information can be centrally managed for each insert I, but this information can also be managed for each blade part as shown in FIG. 3(c).

Specifically, as shown in FIG. 3(c), the main surface Ib (the cutting blade position identification image) of the insert I is partitioned into blade parts (in the present example, FIG. 3(b) is partitioned vertically), and a tool ID based on the individual identification image is assigned to each part, thereby enabling centralized management of the associated individual identification information and cutting blade position identification information.

The two types of information associated in this manner (the individual identification information and the cutting blade position identification information) are displayed on the display device 16 as shown in FIG. 2. The display device 16 of FIG. 2 displays information regarding a portion of one insert I, and in particular, the lower half including the blade part (the lower portion in FIG. 3(c)).

The two types of information associated in this manner (individual identification information and cutting blade position identification information) are stored as various data together with tool type information such as the model name of the cutting tool input from the tool type input part 18, as shown in FIG. 2. The tool type input part 18 is a code reader, and the tool type information is obtained by reading a barcode attached to the packaging of the cutting tool or printed on the cutting tool body, or a matrix type two-dimensional code such as a QR code^{™}. A manual input device such as a keyboard can also be used as the tool type input part 18.

The foregoing is a description of the individual identification and cutting blade position identification of the insert constituting a cutting tool having replaceable cutting blades using the identification confirmation device 10 of FIG. 2. Individual identification and cutting blade position identification of an end mill, which is a cutting tool with an integrated cutting blade, using the identification confirmation device 10 of FIG. 2 will be described below.

An end mill (not illustrated) is arranged on the glass plate GP in the identification confirmation device 10 shown in FIG. 2. In this state, the shank part (the portion where a blade is not formed) of the end mill is captured by the individual identification camera 12, and an image (individual identification image) of, for example, the bottom surface of the shank part is obtained.

FIG. 4 shows an end mill, which is a cutting tool having an integrated cutting blade (FIG. 4(a)), and information obtained as a result of individual identification of the end mill using the identification confirmation device 10 shown in FIG. 2 (FIG. 4(b)).

The information shown in FIG. 4(b) is a tool ID (individual identification information consisting of a character string of FIG. 4(b)) assigned based on the individual identification image of the bottom surface SB of the shank part of the end mill EM captured by the individual identification camera 12.

In this manner, the individual identification information can be displayed on the display device 16 shown in FIG. 2. Furthermore, this information can be stored as various data in the tool type input part 18 in FIG. 2.

### [Data Management Device 20]

Returning to FIG. 1, the data management device 20 comprises a controller 21 and a database storage device 22, which comprises an individual identification database 23, a wear performance database 24, a remaining life estimation database 25, and a wear estimation database 26.

The data management device 20 can be constructed from a computer device including a central processing unit (CPU), a memory device such as random access memory (RAM) or read-only memory (ROM), a storage device such as a hard disk drive (HDD) or a solid-state drive (SSD), an input/output port, and bidirectional buses interconnecting these, and related software. The data management device 20 may be configured in software as a part of the NC device or machine controller of the machine tool 50, which is described later.

### (Controller 21)

The controller 21 is a device for converting information (individual identification information and cutting blade position identification information) centrally managed in the identification confirmation device 10 into a database using specific calculation processing, etc., and creating the various databases 23 to 26 stored in the database storage device 22, which is described later.

The computational processing required for the controller 21 is not particularly limited as long as it is processing for specifically quantifying and associating the information obtained using the individual identification camera 12 and the cutting blade position identification camera 14 (individual identification information and cutting blade position identification information) with the barcode information (tool type information), and known technologies can be used.

### (Database Storage Device 22)

The database storage device 22 is a device for storing the following various databases 23 to 26 obtained via arithmetic processing by the controller 21. The various databases 23 to 26 will be described in detail below.

### <<Individual Identification Database 23>>

The individual identification database 23 is an organized collection of data such as characteristics for each individual (or each partitioned part of an individual) for the above-mentioned parts of the tool and the tool itself (i.e., the insert I and the end mill EM). The controller 21 processes the information centrally managed in the identification confirmation device 10 to create various data, and further organizes this data into a database, whereby the individual identification database 23 is obtained.

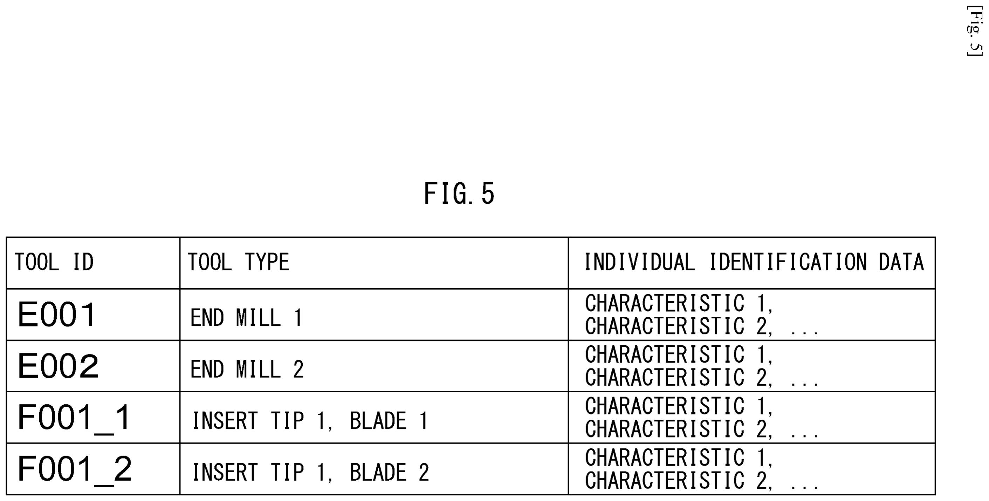

FIG. 5 is a table showing an example of the individual identification database 23 shown in FIG. 1. As shown in the drawing, the individual identification database 23 includes a tool ID, a tool type, and individual identification data, and the individual identification data is image characteristics of a seat or shank part corresponding to each blade part necessary for identifying each cutting blade, and these characteristics are stored in a binary format.

### <<Wear Performance Database 24>>

The wear performance database 24 is an organized collection of data including the machining time (minutes), machining length (m), and wear amount (mm) calculated for each of the above-mentioned tool parts and the tool itself (hereinafter sometimes referred to as "tool, etc."). The wear performance database 24 is created by the controller 21 based on various data stored in the individual identification database 23. As used herein, machining time (minutes) refers to the total time during which cutting is performed using a tool, etc., the machining length (m) refers to the total length of the workpiece material actually cut and machined by these tools, etc., and the wear amount (mm) refers to the maximum wear amount of the blade part of these tools, etc. (for example, the maximum dimension between the ridgeline of the blade part when new and the ridgeline of the blade part after cutting).

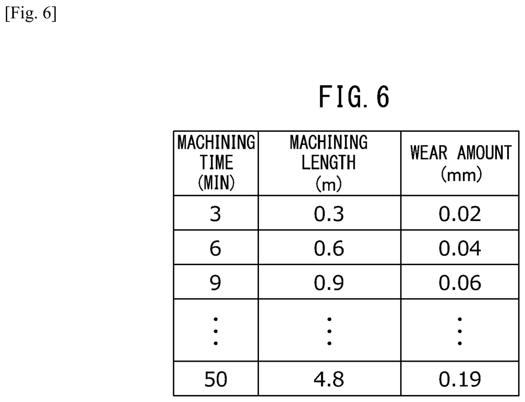

FIG. 6 is a table showing an example of the wear performance database 24 shown in FIG. 1. As shown in the drawing, the wear performance database 24 includes machining time (minutes), machining length (m), and wear amount (mm), and in the example shown in FIG. 6, data for every 3 minutes of machining time is shown.

### <<Remaining Life Estimation Database 25>>

The remaining life estimation database 25 is a set of lifespan curves expressed as a function of the machining time or machining length, which are used to know how much lifespan is left in a tool, etc., when performing finishing (F), semi-finishing (SF), and rough machining (R), assuming a combination of the above-mentioned tools, etc., with a specific workpiece material. The remaining life estimation database 25 is created by the controller 21 based on various data stored in the wear performance database 24, and is updated as information in the wear performance database 24 accumulates.

Finishing (F) as used herein refers to machining for machining the workpiece material to meet the dimensional accuracy and finished surface roughness determined by the design and product specifications, semi-finishing (SF) refers to machining that prepares the workpiece material for finishing on the premise that cutting force and cutting heat will not be applied to the workpiece material, and rough machining (R) refers to cutting of the workpiece material performed to a state where a semi-finished machining allowance remains, with the aim of removing unnecessary excess material in a short period of time.

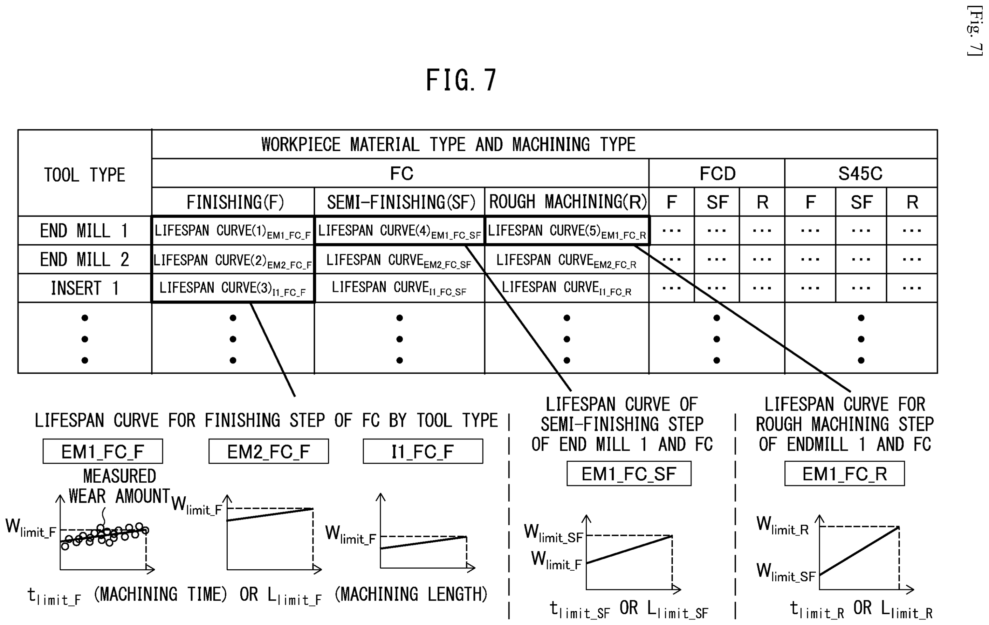

FIG. 7 is a table showing an example of the remaining life estimation database 25 shown in FIG. 1. As shown in the drawing, the remaining life estimation database 25 stores lifespan curves obtained for each tool type, workpiece material type, and machining type (finishing, semi-finishing, and rough machining). For each lifespan curve shown in FIG. 7, by clicking on the corresponding column, a specific graph such as that shown at the bottom of the drawing can be seen. These graphs will be described later.

In FIG. 7, the subscripts of tool type (EM1, etc.), workpiece material type (FC, etc.), and machining type (F, etc.) are added to the lower right of the characters such as "lifespan curve (1)," and many different lifespan curves are stored in the remaining life estimation database 25 according to the combinations of these. Regarding the workpiece material type, FC means steel (gray iron casting) as specified in JIS G5501, FCD means steel (spheroidal graphite cast iron) as specified in JIS G5502, and S45C means steel (carbon steel for machine construction) as specified in JIS G4051.

The lifespan curves (1) to (5) of FIG. 7 will be specifically described in detail below. In the lower part of the drawing, from the left, lifespan curve (1), lifespan curve (2), lifespan curve (3), lifespan curve (4), and lifespan curve (5) are specifically shown as graphs, and in each of these, the vertical axis represents the measured wear amount of the tool, and the horizontal axis represents the machining time or machining length (of the workpiece material).

For the wear amount, machining time, and machining length, data from the wear performance database 24 described above is used, and each lifespan curve is created by the controller 21 of FIG. 1. Furthermore, for all of the lifespan curves (1) to (5), the subscript "limit" in the symbols Wₗᵢₘᵢₜ, tₗᵢₘᵢₜ, and Lₗᵢₘᵢₜ means the limit value (lifespan).

With reference to the lifespan curve (1) (subscript: EM1_FC_F) on the lower left side of FIG. 7, multiple measured wear amounts are plotted, and these plots are the basis for deriving the lifespan curve. These plots are the actually measured wear amounts, and the lifespan curve can be calculated based on these plots using the least squares method. Note that while the lifespan curve (1) shown in FIG. 7 is expressed as a linear function, in reality, it can also be expressed as a quadratic or higher power polynomial function, an exponential function, a power function, a logarithmic function, etc.

Likewise, with reference to the lifespan curve (2) (subscript: EM2_FC_F) and lifespan curve (3) (subscript: I1_FC_F) at the bottom of FIG. 7, line segments of approximately the same shape as lifespan curve (1) are obtained. Note that for lifespan curves (2) and (3), the plurality of plots described for lifespan curve (1) are omitted. For lifespan curves (2) and (3), the tool type is different from that of lifespan curve (1), but the workpiece material type (gray cast iron (FC)) and machining type (finishing (F)) are the same. Thus, the line segments of lifespan curves (2) and (3) have different initial wear amounts as compared to the line segment of lifespan curve (1), but the slopes of the line segments are approximately the same.

Likewise, with reference to lifespan curve (4) (subscript: EM1_FC_SF) at the bottom of FIG. 7, a line segment with a different shape from that of lifespan curve (1) is obtained. Note that the plurality of plots described in lifespan curve (1) are also omitted for lifespan curve (4). For lifespan curve (4), the machining type is different from that of lifespan curve (1), but the tool type (end mill 1) and workpiece material type (gray cast iron (FC)) are the same. Thus, the line segment of lifespan curve (4) has a substantially equal amount of initial wear as compared to the line segment of lifespan curve (1), but the slope of the line segment is different.

Likewise, with reference to lifespan curve (5) (subscript: EM1_FC_R) at the bottom of FIG. 7, a line segment having a shape significantly different from that of lifespan curve (1) is obtained. Note that the plurality of plots described in lifespan curve (1) are also omitted for lifespan curve (5). For lifespan curve (5), the tool type (end mill 1) and workpiece material type (gray cast iron (FC)) are the same as those of lifespan curve (1), but the machining type is significantly different. Thus, the line segment of lifespan curve (5) is significantly different from the line segment of lifespan curve (1) in terms of both the initial wear amount and the slope of the line segment.

Next, an embodiment in which the remaining lifespan is specifically estimated using the lifespan curve created in this manner, and a tool (part) which satisfies the remaining lifespan is selected will be described in detail. Note that the following example uses the end mill 1 shown in FIG. 7.

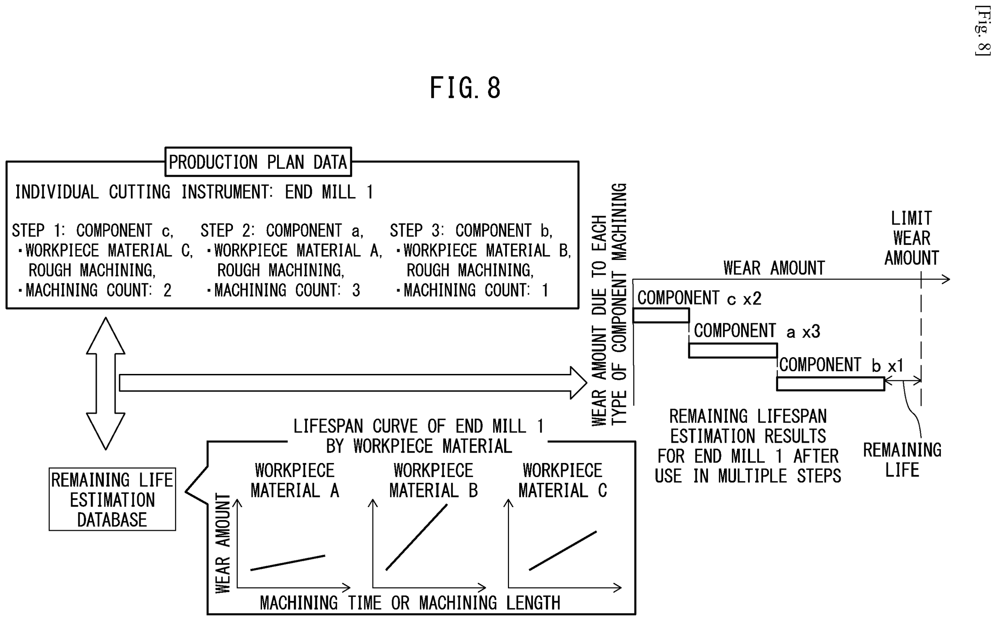

FIG. 8 is a view showing a series of steps for estimating the remaining lifespan of the end mill 1 after cutting, based on a production plan in which a predetermined number of three types of components a, b, and c are cut and machined in succession, assuming the use of the end mill 1 in FIG. 7.

As shown in FIG. 8, in the present example, three steps are performed in sequence. Specifically, in step 1, two components c (composed of workpiece material C) are machined, in step 2, three components a (composed of workpiece material A) are machined, and in step 3, one component b (composed of workpiece material B) is machined. Note that steps 1 to 3 are all rough machining steps.

When the controller 21 of the data management device 20 in FIG. 1 recognizes production plan data such as that shown in FIG. 8, it extracts each of the lifespan curves for end mill 1 and each of the three workpiece materials A, B, and C that have been pre-stored in the remaining life estimation database 25 (the lifespan curves for each workpiece material of end mill 1 shown at the bottom of FIG. 8) and prepares to use these lifespan curves.

Next, as shown on the right side of FIG. 8, the controller 21 calculates the product of the wear amount for each component determined from the three lifespan curves and the number of components to calculate the wear amount of the end mill 1 when cutting is performed in each step, and further calculates the sum of these values to calculate the total wear amount of the end mill 1 when cutting is performed in all steps (total wear amount due to cutting).

Furthermore, as shown on the right side of FIG. 8, the controller 21 calculates the remaining lifespan by computing the difference between the predetermined limit wear amount for rough machining of the end mill 1 and the total wear amount due to the cutting described above (refer to "REMAINING LIFESPAN ESTIMATION RESULT FOR END MILL 1 AFTER USE IN MULTIPLE STEPS" of FIG. 8). Once the remaining lifespan of the end mill 1 has been calculated in this manner, the controller 21 selects an appropriate end mill based on this calculation result, as will be described below.

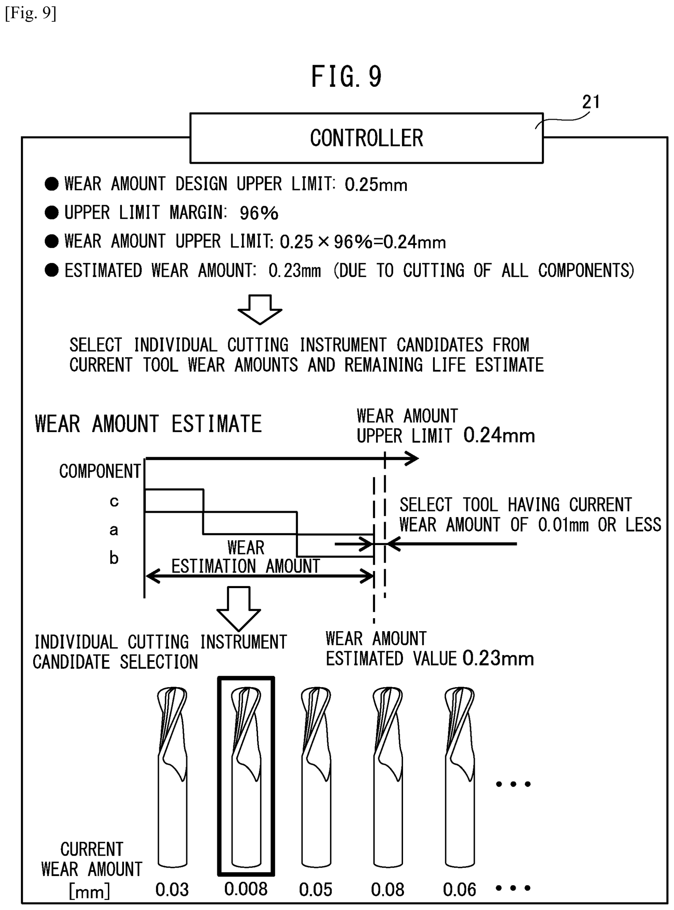

FIG. 9 is a view showing a series of steps for selecting a suitable end mill by the controller 21 included in the data management device 20 of FIG. 1. Note that the matters described in detail below are all performed by the controller 21.

As shown in FIG. 9, for the end mill 1 of the present embodiment, the design upper limit of wear is 0.25 mm, and the upper limit margin (a threshold value that takes safety into account) is 96%. Thus, the controller 21 calculates the product of the design upper limit of wear and the upper limit margin, and sets the result (0.24 mm) as the upper limit of wear. In contrast, the estimated wear amount at the end of the three steps shown in FIG. 7 is 0.23 mm.

After obtaining the above knowledge, the controller 21 calculates the difference between the upper wear amount limit (0.24 mm) and the estimated wear amount (0.23 mm), and based on the result (0.01 mm), concludes to select an end mill with a current wear amount of 0.01 mm or less, and this is displayed on the display device 16 of the identification confirmation device 10.

Finally, based on the conclusions given above, a tool with a current wear amount of 0.01 mm or less is selected from among the tools (end mills) shown in the lower part of FIG. 9. Among the plurality of end mills shown in the drawing, the end mill with a current wear amount of 0.008 mm (second from the left) can be said to be the only suitable end mill (i.e., an end mill that will not reach the limit wear amount even if the three steps shown in FIG. 7 are carried out).

### <<Wear Estimation Database 26>>

The wear estimation database 26 is a collection of information in which thresholds are mapped to ascertain how much lifespan is remaining when performing finishing (F), semi-finishing (SF), and rough machining (R) using a combination of the above-mentioned tools, etc., and a specific workpiece material.

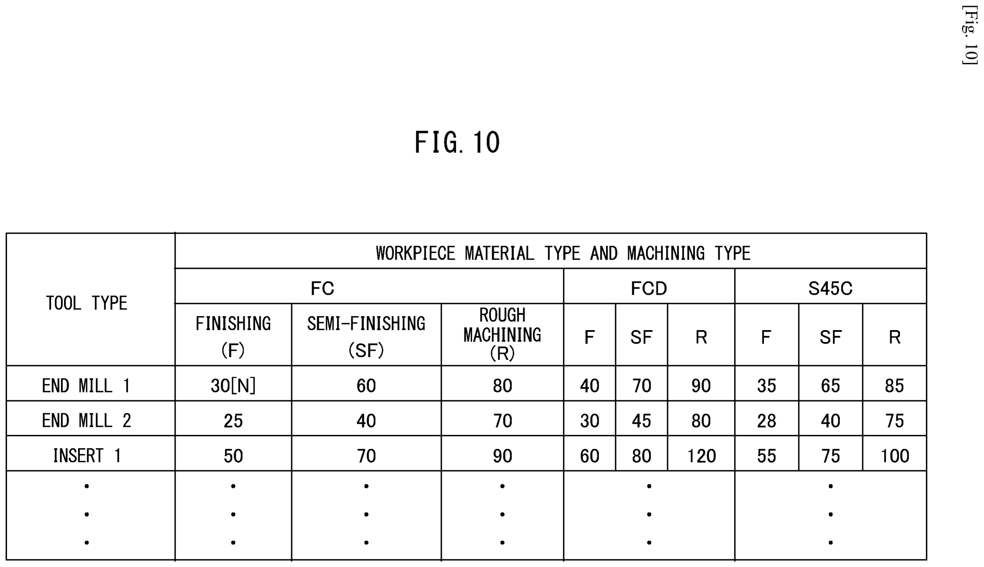

FIG. 10 is a table showing an example of the wear estimation database 26 shown in FIG. 1. As shown in the drawing, in the wear estimation database 26, specific threshold values obtained for each tool type, workpiece material type, and machining type (finishing, semi-finishing, and rough machining) are mapped.

The specific threshold value is a value above which it is estimated that the limit wear amount has been reached, and in the example shown in FIG. 10, the force (N) acting on the tool, etc., during cutting is used as the threshold value. Note that depending on the sensing technology used, the threshold value can be an index such as the acceleration (m/s²) of vibrations occurring in each part of the machine tool 50 during cutting or the current (A) of the spindle motor or feed shaft motor of the machine tool 50 in addition to the force (N) acting on the tool, etc., during cutting.

Next, an embodiment in which such a threshold value is used to estimate whether the blade part is in a normal or abnormal state will be described in detail. Note that the following example uses the end mill 1 shown in FIG. 7, and the force (N) acting on the end mill 1 during cutting is used as the threshold value. Note that the matters detailed below are all performed by the controller 21.

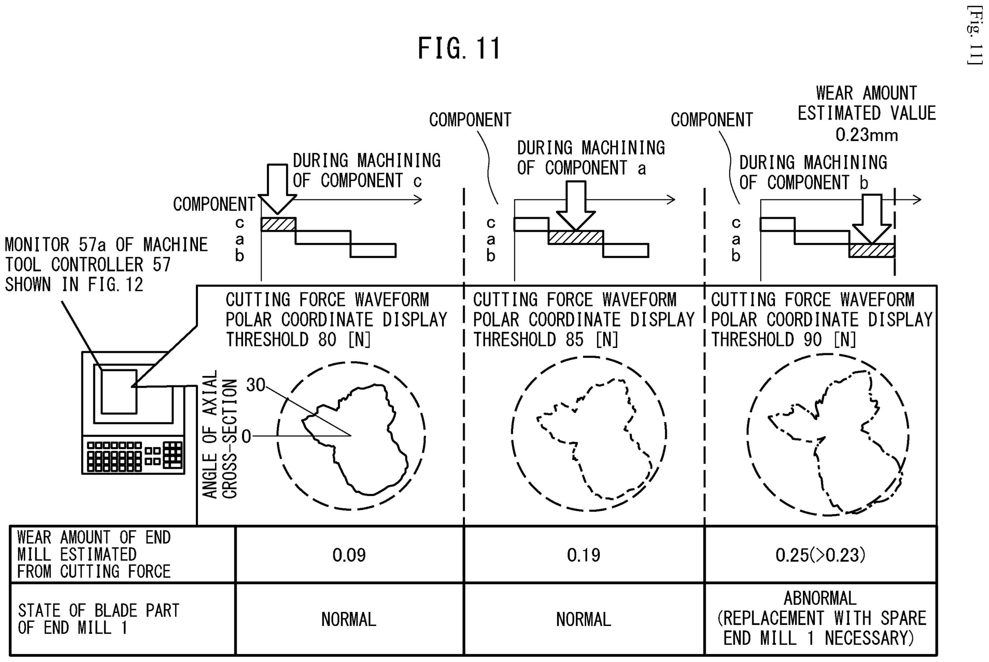

FIG. 11 is a view showing the threshold settings for various components during machining, and the state of the blade part of the end mill 1 when the forces are within and above the threshold values, when cutting is performed based on the production plan consisting of the three steps shown in FIG. 8. More specifically, the upper part of the drawing shows the type of component being machined, the middle part of the drawing shows a polar coordinate system of the waveform of the cutting force (N) in the axial cross section of the end mill 1, and the lower part of the drawing shows the amount of wear of the end mill 1 estimated from the above cutting force waveform, and the state of the blade part of the end mill 1.

As shown in FIG. 11, in machining each component, the threshold value in the polar coordinate display of the cutting force waveform differs depending on the type of workpiece material, and specifically, the threshold value is set to 80 (N), 85 (N), and 90 (N), respectively. The polar coordinate display in FIG. 11 makes it possible to ascertain in which direction and how much force is being applied in a cross-sectional view of the end mill 1.

According to FIG. 11, when machining the three types of components, the cutting force waveform deviates from the dotted circle indicating the threshold only when component b is machined. For each cutting force waveform, the wear amount (mm) of the end mill is estimated based on the force (N) at the point on the waveform that is farthest from the origin. Again, the wear amount exceeds the threshold value of 0.23 (mm) only when component b is machined. After converting the cutting force to the wear amount in this manner, the controller 21 determines the condition of the blade part of the end mill 1 as normal or abnormal.

More specifically, as shown in FIG. 11, the cutting force waveform during machining of component c does not exceed the threshold value of 80 (N), and thus, the wear amount estimate value after conversion does not exceed 0.23 (mm). Likewise, the cutting force waveform during machining of component a does not exceed the threshold value of 85 (N), and thus, the wear amount estimate value after conversion does not exceed 0.23 (mm). Thus, after machining of component c and component a, the condition of the blade part of the end mill 1 is normal, and there is no need to replace it with a spare end mill 1.

In contrast, since a portion of the cutting force waveform exceeds the threshold value of 90 (N) during machining of component b, the wear amount estimate value exceeds 0.23 (mm). Thus, after machining of component b, the condition of the blade part of the end mill 1 is abnormal, and it is necessary to replace it with a spare end mill 1. The above-mentioned cutting force waveform, the converted wear amount estimate value, and the condition (normal or abnormal) of the blade part of the end mill 1 are displayed on a monitor 57a (not illustrated in FIG. 1) of a machine tool controller 57, which will be described later.

### [Tool Stocker 30]

Returning to FIG. 1, the tool stocker 30 is a shelf or the like for storing tools in a factory, and is arranged so as to be associated with the identification confirmation device 10 and a tooling device 40 (which will be described later) as shown in FIG. 1. The tool stocker 30 is an optional component in the cutting tool management system 1 of the present application.

### [Tooling Device 40]

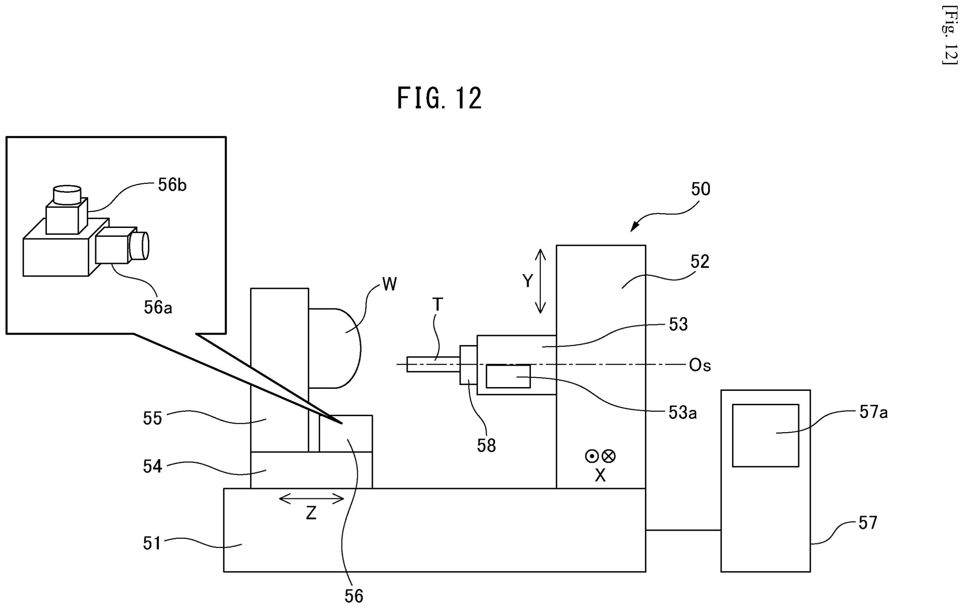

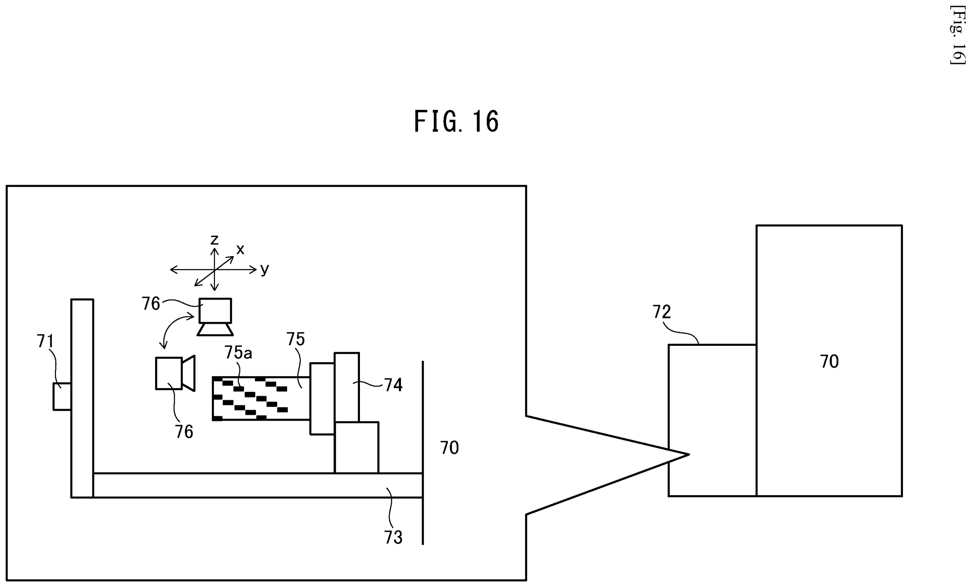

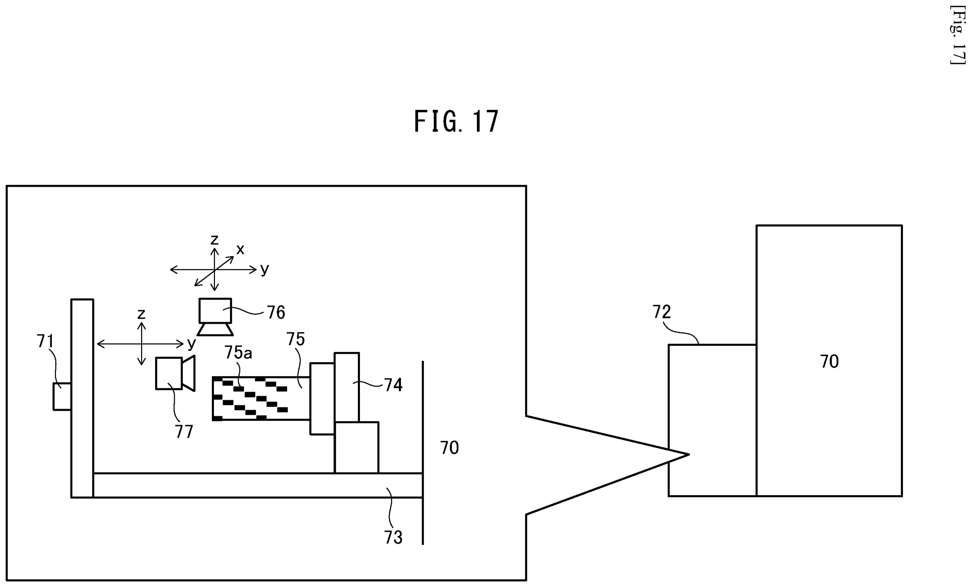

The tooling device 40 is a device used to prepare cutting tools to be attached to a spindle 58 of the machine tool 50 (FIG. 12) described below in a state in which they can be stored in a tool magazine 70 (FIGS. 16 and 17), and is arranged so as to be associated with the data management device 20, the tool stocker 30, and the machine tool 50.

Preparation for attachment of the cutting tool to the machine tool 50 includes mounting the cutting instrument, which has an integrated shank part and cutting blade such as an end mill, on the tool holder, mounting the insert on the cutter body, mounting the cutter body with the insert on it to the tool holder, measuring the cutting tool mounted on the tool holder (for example, tool length (extension length) and tool diameter), and inputting the tool data obtained from the measurement into the data management device 20.

The operator inputs the tool data into a tool database (not illustrated) retained by the machine tool 50 in association with the tool number of the cutting tool and the tool magazine number, which is an address in the tool magazine 70 (FIGS. 16 and 17).

The tooling device 40 can include a device for mounting a cutting tool to a tool holder (for example, a shrink fitting device (not illustrated)), a measurement device 42 (FIG. 1) such as a tool pre-setter for measuring the cutting tool mounted in the tool holder, input devices such as a keyboard (not illustrated) or buttons (not illustrated) for input and operation by an operator, and a monitor 44.

When the monitor 44 is constituted by a touch panel, the monitor 44 can also function as an input device. The tooling device 40 may include a work table (not illustrated) which is used by the operator to attach a cutting instrument to a tool holder. The monitor 44 can be a display (not illustrated) such as a touch panel that is attached to the tool pre-setter.

### [Machine Tool 50]

The machine tool 50 is a device for performing cutting by moving the cutting tool and the workpiece described above relative to each other, and is arranged so as to be associated with the data management device 20 and the tooling device 40.

FIG. 12 is a side view showing an example of a machine tool. The machine tool 50 shown in the drawing is a horizontal machining center, but the machine tool of the present embodiment may be a vertical machining center. The machine tool 50 includes a bed 51, a column 52 attached to the bed 51 so as to be capable of reciprocating in the X-axis direction (the direction perpendicular to the paper surface in FIG. 12 ), which is a horizontal left-right direction, a spindle head 53 attached to the column 52 so as to be capable of reciprocating in the Y-axis direction, which is the vertical up-down direction, a cutting force sensor 53a attached to the spindle head 53, a spindle 58 supported by the spindle head 53 so as to be capable of rotating about a center axis Os extending in a horizontal direction perpendicular to the X-axis and Y-axis and having a cutting tool T attached to its tip, a table 54 disposed on the opposite side of the column 52 on the bed 51 and attached so as to be capable of reciprocating in the Z-axis direction (the left-right direction in FIG. 12 ), which is the horizontal front-back direction parallel to the center axis Os, a blade condition confirmation camera 56 affixed to the table 54, and a machine tool controller 57 including a monitor 57a.

In FIG. 12, the workpiece W is affixed to the table 54 via an equelle 55 so as to face the tip of the spindle 58. The workpiece W may be affixed directly to the table 54 without using a workpiece mounting fixture such as the equelle 55. The workpiece W may also be affixed to the equelle 55 or the table 54 via a pallet (not illustrated) or a suitable jig (not illustrated).

The machine tool 50 includes an X-axis feed device (not illustrated) for reciprocating the column 52 in the X-axis direction, a Y-axis feed device (not illustrated) for reciprocating the spindle head 53 in the Y-axis direction, and a Z-axis feed device (not illustrated) for reciprocating the table 54 in the Z-axis direction. Furthermore, the machine tool 50 may include at least one rotary feed device (B-axis or C-axis rotary feed device) for rotating and feeding the cutting tool T attached to the spindle 58 and the workpiece W relative to each other.

The above-mentioned X-axis, Y-axis and Z-axis feed devices may include ball screws (not illustrated) extending in the X-axis, Y-axis and Z-axis directions, and X-axis, Y-axis and Z-axis servo motors (not illustrated) connected to one end of the ball screws.

Furthermore, the machine tool 50 includes an NC device (not illustrated) for controlling the X-axis, Y-axis, and Z-axis servo motors, as well as a spindle servo motor (not illustrated) for rotating and driving the spindle 58. When the machine tool 50 comprises a B-axis or C-axis rotary feed device, the NC device also controls the B-axis or C-axis servo motor (not illustrated).

The machine tool controller 57 may comprise the data management device 20 and an NC device. Furthermore, the machine tool controller 57 may comprise a machine controller (not illustrated) for controlling related devices of the machine tool 50, such as the tool magazine 70, an automatic tool changer (not illustrated), a machining fluid supply device (not illustrated), an oil/air supply device (not illustrated), and a compressed air supply device (not illustrated).

In the machine tool 50, the cutting force sensor 53a is a sensor for measuring various threshold values (forces (N) acting on the tool (part) during cutting) included in the wear estimation database 26 described above.

As shown in the balloon in FIG. 12, the blade condition confirmation camera 56 includes two types of cameras, a bottom observation camera 56a and a side observation camera 56b, for capturing the blade part of the cutting tool T. Each camera 56a, 56b captures a predetermined part of the tool to obtain two types of images, and these images are processed by the controller 21 to obtain digitized wear amount data. This wear amount data is then associated with information on the machining time or machining length and stored in the wear performance database 24. Furthermore, the digitized wear amount data from the two types of images described above is used to determine whether the tool should be used continuously thereafter. The blade condition confirmation camera 56 may be installed not only on the table 54 as shown in FIG. 12, but also in a tool magazine or outside the machine tool.

The machine tool controller 57 is a device which allows the operator of the machine tool 50 to operate the machine tool 50 while ascertaining the operating status. The operator loads an NC program into the machine tool controller 57 to perform automatic operation. Alternatively, the operator moves the table 54 forward and backward in the direction of the spindle 58 while watching the monitor 57a to move the cutting tool T and the workpiece W relative to each other, thereby performing a predetermined cutting operation.

The foregoing is an overview of the cutting tool management system, but three preferred embodiments will be described in detail below. The following embodiments relate to a tooling sheet, an externally installed tool observation device, and a tool observation device installed in a tool magazine, each of which can be optionally adopted in the above-mentioned cutting tool management system.

### (Tooling Sheet)

For example, when using an insert, the cutting tool management system 1 of the present embodiment can include a tooling sheet which stores which insert is attached to which position on the cutter body.

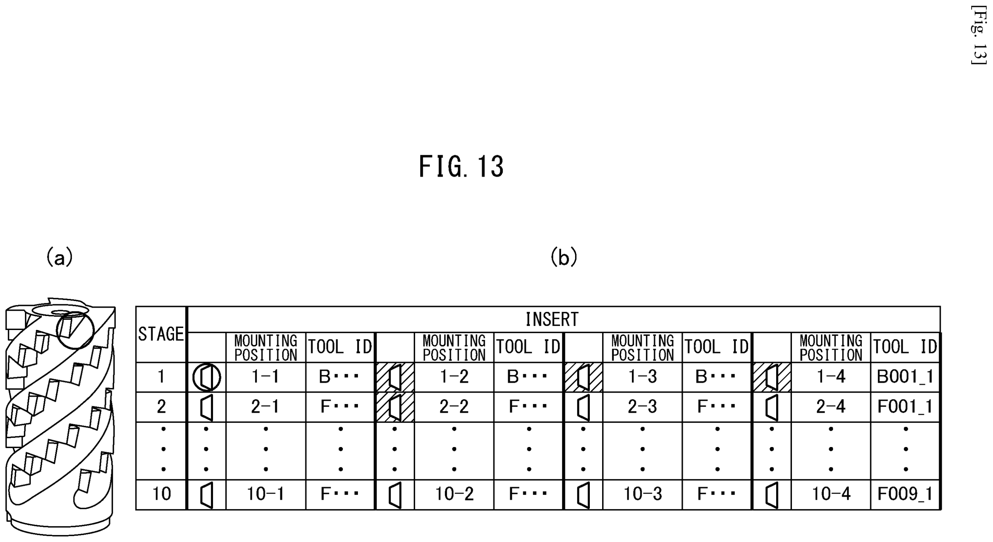

FIG. 13 shows a cutter body to which a plurality of inserts are attached (FIG. 13(a)), and a table, i.e., a tooling sheet, showing which inserts are attached to which positions on the cutter body (FIG. 13(b)). In the drawing, the insert circled in FIG. 13(b) is attached to the circled portion of the cutter body in FIG. 13(a).

By combining the number of stages of the cutter body (which are designated as the first stage, second stage, third stage, etc., moving downward from the top of the drawing in the vertical direction) and the number of positions in each stage (one of the positions is designated as position 1, and the adjacent positions clockwise from position 1 when viewed from above the drawing are designated as positions 2, 3, etc.), mounting position 1-1, mounting position 1-2, etc., shown in FIG. 13(b) are determined as specific positions of the cutter body.

The tooling sheet, in which combinations of such mounting positions of the cutter body and the tool IDs (in this case, the tool IDs related to the inserts) are recorded, is displayed on the monitor 44 of the tooling device 40 shown in FIG. 12. Each of the plurality of inserts is individually identified by the corresponding tool ID before being mounted on the cutter body, and after a predetermined cutting operation is performed, a blade part corresponding to each tool ID is captured by the blade condition confirmation camera 56, and the amount of wear is quantified by the controller 21 of the data management device 20 based on the images.

As a result, an insert for which it is determined that replacement is necessary is managed so that the display mode on the tooling sheet changes to distinguish it from other inserts (for example, the display color changes, the square pattern changes, or the drawing flashes), and the tooling sheet is updated in this manner when the specified cutting is completed. Note that in FIG. 13, the insert to be replaced is displayed with diagonal lines.

For example, the latest information on 40 inserts from mounting position 1-1 to mounting position 10-4 is recorded in the tooling sheet shown in FIG. 13. According to the tooling sheet shown in the same drawing, it is found that replacement is necessary for the inserts at mounting positions 1-2, 1-3, 1-4, and 2-2.

### (Externally Installed Tool Observation Device)

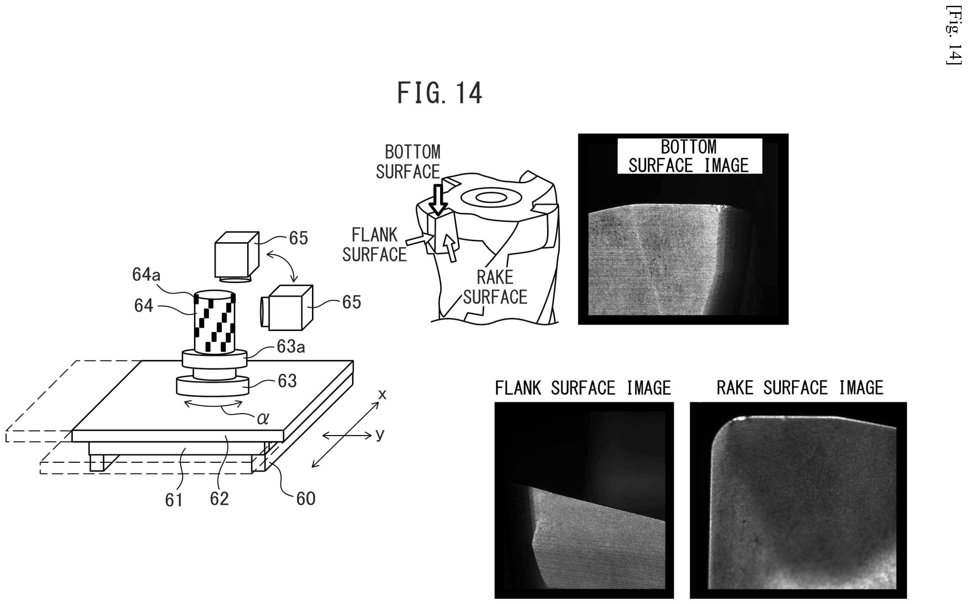

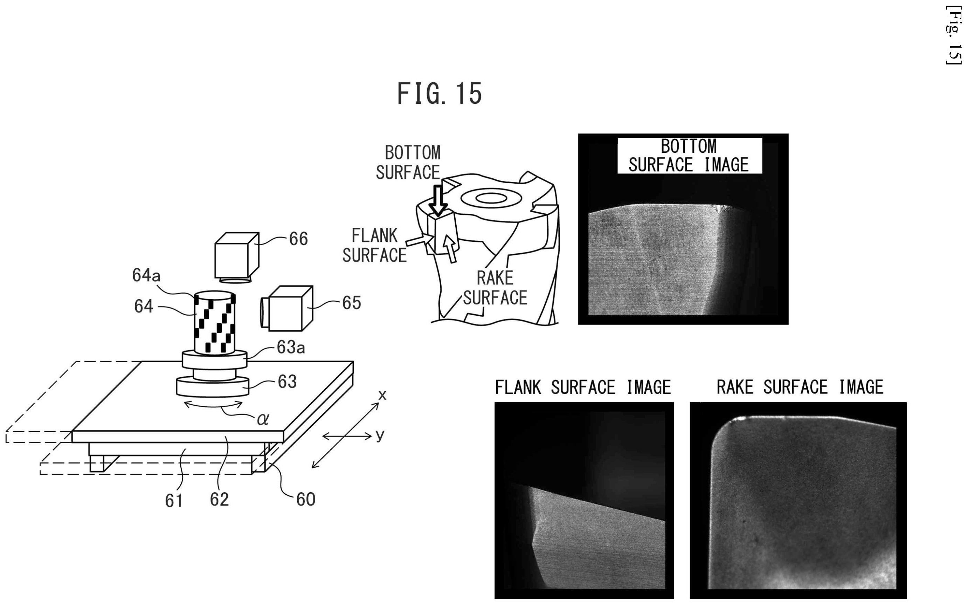

FIGS. 14 and 15 are schematic views showing examples of externally installed tool observation devices installed in a tool room of a factory, etc. Each of the devices shown in these drawings comprises a base part 60, a first stage 61 arranged above the base part 60 and movable in the x-axis direction relative to the base part 60, a second stage 62 arranged above the first stage 61 and movable in the y-axis direction relative to the base part 60, and a third stage 63 arranged on the second stage 62 and including a pedestal 63a that can rotate in the α direction.

In the example shown in FIG. 14, a cutting instrument 64 comprising an insert 64a is placed on a pedestal 63a, and the state of the blade part in the insert 64a (in the example shown in the drawing, the bottom surface, flank surface, and rake surface of the insert) can be captured and observed by a single blade condition confirmation camera 65 that is controlled so that its posture can be appropriately changed. Note that FIG. 14 shows the bottom surface, flank surface, and rake surface of the insert 64a, and also shows images of these surfaces captured by the single blade condition confirmation camera 65.

In contrast, in the example shown in FIG. 15, a cutting instrument 64 including an insert 64a is placed on a pedestal 63a, and the state of the blade part in the insert 64a (in the example shown in the drawing, the bottom surface, flank surface, and rake surface of the insert) can be captured and observed by one of two fixed blade condition confirmation cameras 65, 66. Note that FIG. 15 shows the bottom surface, flank surface, and rake surface of the insert 64a, in the same manner as FIG. 14, and also shows images of these surfaces captured by the two blade condition confirmation cameras 65, 66.

### (Tool Observation Device Installed in Tool Magazine)

FIGS. 16 and 17 are schematic views showing examples of tool observation devices installed in a tool magazine. The devices shown in these drawings are stored in a tool magazine 70, and a handle portion 71 is moved manually or automatically to the left of the drawing to move the balloon portion of the drawing from the tool magazine 70 to a transport station 72, where the tool is observed. Each of the devices shown in FIGS. 16 and 17 comprises a base part 73 and a rotating stage 74 installed in the base part 73.

In the example shown in FIG. 16, a cutting instrument 75 including an insert 75a is attached to a rotating stage 74, and the state of the blade part at the insert 75a can be captured and observed by a single blade condition confirmation camera 76 that is controlled so that its posture and position can be appropriately changed. The blade condition confirmation camera 76 shown in FIG. 16 can slide in each of the x, y, and z directions in the same posture (state in which the camera lens is facing in the same direction).

In contrast, in the example shown in FIG. 17, a tool 75 including an insert 75a is attached to a rotating stage 74, and the state of the blade part at the insert 75a can be captured and observed by two blade condition confirmation cameras 76, 77 that are controlled so that their positions can be changed as appropriate. The blade condition confirmation camera 76 shown in FIG. 17 can slide in each of the x, y, and z directions in the same posture (when the camera lens is facing in the same direction), and the blade condition confirmation camera 77 can slide in each of the y and z directions in the same posture.

### <Cutting Tool Management Method>

The above is a cutting tool management system according to an embodiment of the present invention, and a method for managing cutting tools using the cutting tool management system according to an embodiment of the present invention will be described in detail below. The matters described in detail below are controlled by the controller 21 shown in FIG. 1.

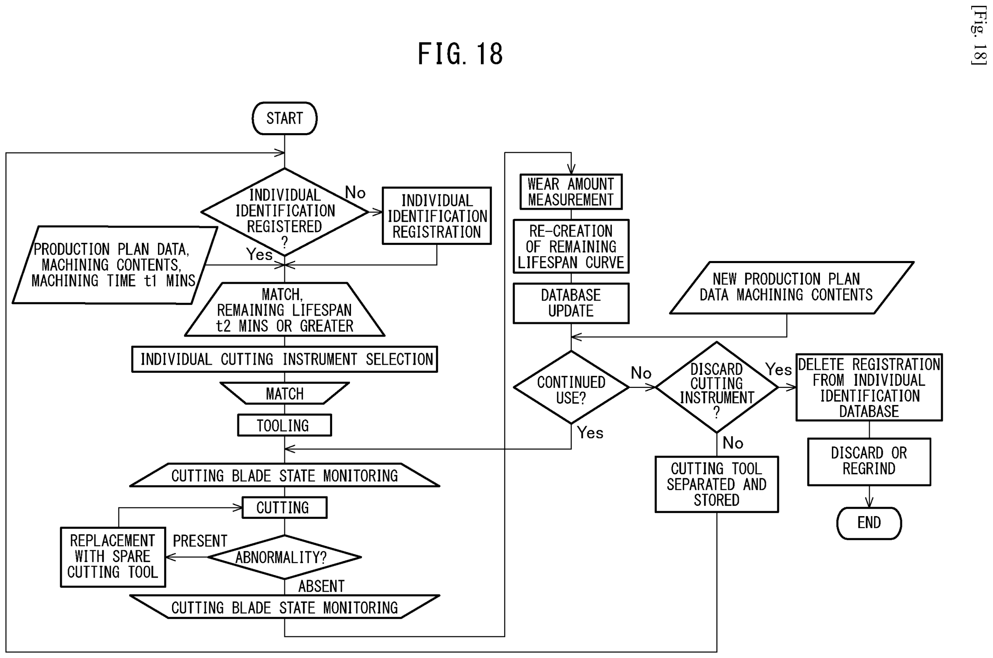

FIG. 18 is a flowchart showing the operation procedure of the cutting tool management system according to the embodiment of the present invention. As shown in the drawing, first, management of the cutting tool is started by "Start" shown in FIG. 18, and whether or not "individual identification registered" is confirmed by the individual identification database 22 shown in FIG. 1. When individual identification is registered, a plurality of cutting instruments in the tool stocker 30 shown in FIG. 1 are collated based on the production plan data (processing contents and machining time t1 minutes, etc.) to select a cutting instrument with a remaining lifespan of t2 minutes or more. Conversely, when individual identification is not registered, individual identification is performed using the identification confirmation device 10 shown in FIG. 1, and a plurality of cutting instruments are then collated as described above to select a cutting instrument with a remaining lifespan of t2 minutes or more.

Next, the selected cutting tool and tool holder are combined to form a cutting tool T (tooling), which is stored in the tool magazine 70 of the machine tool 50 and then attached to the spindle 58 by an automatic tool changer (not illustrated).

Next, cutting is performed using the cutting tool T while monitoring the cutting blade condition with the cutting force sensor 53a shown in FIG. 12. Based on threshold values such as the polar coordinate display of the cutting force waveform described above, when there is an abnormality in the condition of the blade part, the cutting tool T is replaced with a spare, and when there is no abnormality, monitoring of the cutting blade condition with the cutting force sensor 53a continues until machining of one component is completed.

After machining of one component is completed, or after one process instructed in the production plan data is completed, each cutting blade of the cutting tool T is captured by the blade condition confirmation camera 56, and the wear amount of each cutting blade is measured based on the image. A remaining lifespan curve for cutting performed under the same conditions (workpiece material type and machining type) as most recently performed is then created again, and the controller 21 in the data management device 20 shown in FIG. 1 updates the various databases 24 to 26.

Thereafter, if the use of the cutting tool T is to be continued based on the processing content instructed in the new production plan, the tooling state of FIG. 18 is returned to, and if the use is not to be continued, consideration is given to whether or not to discard the cutting instrument attached to the cutting tool T.

When discarding the cutting instrument, the data on the target cutting instrument is deleted from the individual identification database 23 of FIG. 1, and the target cutting instrument is then discarded or re-ground, and "management" is terminated. Conversely, when the cutting instrument is not discarded, the insert is removed from the cutter body and stored, and it is reconfirmed whether or not "individual identification registered" of FIG. 18 is displayed, and the same processing as described above is followed.

### INDUSTRIAL APPLICABILITY

According to the cutting tool management system of the present invention described above, it is possible to estimate the remaining lifespan of each cutting blade from the wear amount of the cutting tool without requiring a special device for forming a two-dimensional code or the like near the blade part, and without using a special tool with a marking as an individual identifier on the tool surface in advance. Thus, the present invention is extremely promising for managing various tools.

### REFERENCE SIGNS LIST

- 1: cutting tool management system
- 10: identification confirmation device
- 12: individual identification camera
- 14: cutting blade position identification camera
- 16: display device (monitor)
- 18: tool type input part
- 20: data management device
- 21: controller
- 22: database storage device
- 23: individual identification database
- 24: wear performance database
- 25: remaining life estimation database
- 26: wear estimation database
- 30: stocker (in-factory)
- 40: tooling device
- 42: measurement device
- 44: monitor
- 50: machine tool
- 51: bed
- 52: column
- 53: spindle head
- 53a: cutting force sensor
- 54: table
- 55: equelle
- 56, 65, 66, 76, 77: blade condition confirmation camera
- 57: machine tool controller
- 57a: monitor
- 58: spindle
- 60, 73: base part
- 61: first stage
- 62: second stage
- 63: third stage
- 63a: pedestal
- 64, 75: cutting instrument
- 64a, 75a: insert
- 70: tool magazine
- 71: handle portion
- 72: transport station
- 74: rotating stage
- EM: end mill
- GP: glass plate
- I: insert
- Ia: seat
- Ib: main surface
- Os: center axis
- SB: shank part bottom surface of end mill
- T: cutting tool

## Claims

1. A cutting tool management system for managing lifespans of a plurality of cutting tools, the system comprising:
an individual identification camera for capturing a seat of an insert attached to a tool or a shank part of a tool,
a blade condition confirmation camera for capturing a blade part of the insert or the tool,
an individual identification database in which there are stored characteristics of an image of the seat of the insert or the shank part captured by the individual identification camera in association with a tool ID,
a wear performance database in which there is stored wear performance data obtained from the image of the blade part of the insert or the tool captured by the blade condition confirmation camera for each tool ID stored in the individual identification database, and
a controller for estimating a remaining lifespan of each tool from the wear performance data.

2. The cutting tool management system according to claim 1, wherein in the case of an insert which can selectively use a plurality of blade parts, the individual identification database partitions the image of the seat in accordance with a number of the blade parts and stores individual identification information for each blade part.

3. The cutting tool management system according to claim 1, further comprising a remaining life estimation database in which there is stored a lifespan curve, which is a remaining lifespan estimation condition, for each workpiece material and/or machining program, wherein the controller, when performing cutting using a plurality of machining programs based on a production plan, combines remaining lifespan estimation conditions for each workpiece material and/or machining program stored in the remaining life estimation database based on the production plan, and estimates a remaining lifespan of the cutting tool after use in a plurality of steps.

4. The cutting tool management system according to claim 1, further comprising
a cutting blade position identification camera for capturing a blade part of a cutting tool, and
a display device for displaying on a screen a tool ID associated with characteristics of an image of the seat of the insert or the shank part captured by the individual identification camera, and an image of a blade part of the tool captured by the cutting blade position identification camera.

5. The cutting tool management system according to claim 1, further comprising a remaining life estimation database in which there is stored a lifespan curve in accordance with a combination of tool type and workpiece material or component.

6. The cutting tool management system according to claim 1, further comprising a tooling sheet in which there is stored which insert is attached to which position when a plurality of inserts are attached to be used as one tool, and a monitor for indicating a position of an insert to be replaced on the tooling sheet to inform an operator.
